# EUROPEAN PATENT APPLICATION

(11) **EP 4 368 039 A1**
(43) Date of publication of application: **15.05.2024**
(21) Application number: 21949348.3
(22) Date of filing: 08.07.2021
(51) Int. Cl.: A24F 40/40

(54) **POWER SUPPLY UNIT FOR AEROSOL GENERATION DEVICE**

(71) Applicant: Japan Tobacco, Inc., Tokyo, 105-6927 (JP)
(72) Inventor: KITAHARA, Minoru, Tokyo 130-8603 (JP); TANAKA, Shujiro, Tokyo 130-8603 (JP); ONO, Yasuhiro, Tokyo 130-8603 (JP)
(74) Representative: Hoffmann Eitle
(86) International application number: PCT/JP2021/025831
(87) International publication number: WO 2023/281715

(57) **Abstract**

A power supply unit (10) for an aerosol inhaler (1) comprises: a power supply (BAT); a positive-electrode-side discharge terminal (41a) and a negative-electrode-side discharge terminal (41b), each having connected thereto either a heater (21) that consumes electric power supplied from the power supply (BAT) and generates an aerosol from an aerosol source (22) or a coil that feeds electric power to a load by electromagnetic induction; and an MCU mounting substrate (7) including a main surface (7a) on which the positive-electrode-side discharge terminal (41a) is installed and an auxiliary surface (7b) on which the negative-electrode-side discharge terminal (41b) is installed.

## Description

### TECHNICAL FIELD

The present invention relates to a power supply unit of an aerosol generating device.

### BACKGROUND ART

In a power supply unit of an aerosol generating device described in Patent Literatures 1 and 2, a discharge terminal connected to a heater is indirectly connected to a circuit substrate via wiring.

### CITATION LIST

### PATENT LITERATURE

Patent Literature 1: CN111096480A
Patent Literature 2: JP6633788B

### SUMMARY OF INVENTION

### TECHNICAL PROBLEM

However, in the power supply unit of the aerosol generating device described in Patent Literatures 1 and 2, the discharge terminal is connected to the circuit substrate via the wiring, which hinders miniaturization.

The present invention provides a downsized power supply unit of an aerosol generating device.

### SOLUTION TO PROBLEM

A power supply unit of an aerosol generating device according to the present invention, includes:
a power supply;
a positive electrode-side discharge terminal and a negative electrode-side discharge terminal to which a load configured to generate aerosol from an aerosol source by consuming electric power supplied from the power supply or a coil configured to transmit electric power to the load by electromagnetic induction is connected; and
a circuit substrate including a first surface on which the positive electrode-side discharge terminal is mounted and a second surface which is a back surface of the first surface and on which the negative electrode-side discharge terminal is mounted.

### ADVANTAGEOUS EFFECTS OF INVENTION

According to the present invention, since the positive electrode-side discharge terminal and the negative electrode-side discharge terminal are mounted on the circuit substrate, the power supply unit of the aerosol generating device may be decreased in size.

### BRIEF DESCRIPTION OF DRAWINGS

[FIG. 1] FIG. 1 is a perspective view of an aerosol inhalation device 1.
[FIG. 2] FIG. 2is another perspective view of the aerosol inhalation device 1.
[FIG. 3] FIG. 3is a cross-sectional view of the aerosol inhalation device 1.
[FIG. 4] FIG. 4is a perspective view of a power supply unit 10.
[FIG. 5] FIG. 5is an exploded perspective view of the power supply unit 10.
[FIG. 6] FIG. 6is a diagram showing a circuit configuration of the power supply unit 10.
[FIG. 7] FIG. 7is a perspective view of the power supply unit 10 from which a case 11 is removed.
[FIG. 8] FIG. 8is a diagram showing a main surface-side surface layer 71a of an MCU mounting substrate 7.
[FIG. 9] FIG. 9is a diagram showing a second wiring layer 74a of the MCU mounting substrate 7.
[FIG. 10] FIG. 10is a diagram showing a sub surface-side surface layer 71b of the MCU mounting substrate 7.
[FIG. 11] FIG. 11is a diagram showing a fourth wiring layer 74b of the MCU mounting substrate 7.
[FIG. 12] FIG. 12is a diagram showing a positional relation between the MCU mounting substrate 7 and a discharge terminal 41.
[FIG. 13] FIG. 13is a cross-sectional view of the MCU mounting substrate 7.

### DESCRIPTION OF EMBODIMENTS

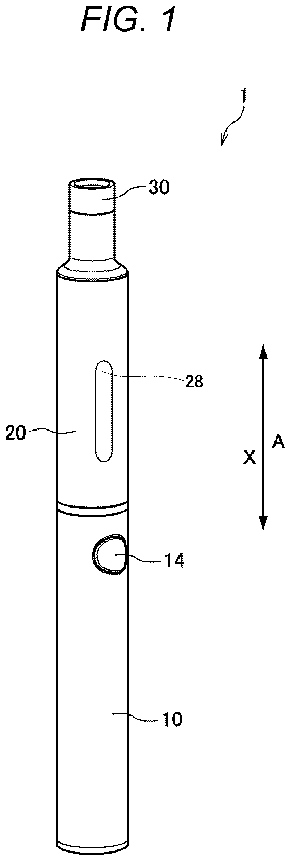

Hereinafter, a power supply unit of an aerosol generating device according to an embodiment of the present invention will be described, and first, the aerosol generating device (hereinafter, referred to as an aerosol inhalation device) to which the power supply unit is attached will be described with reference to FIGs. 1 to 3.

### (Aerosol Inhalation Device)

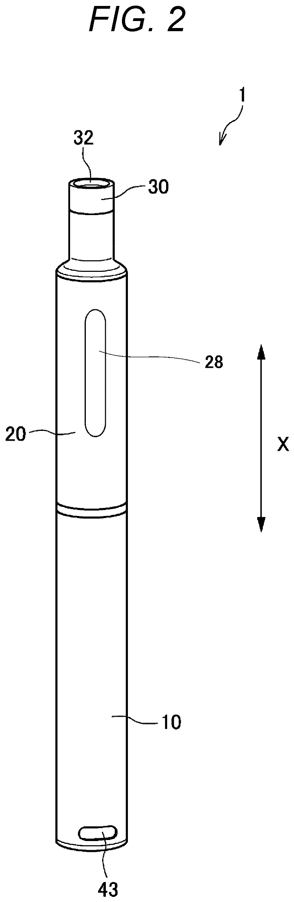

An aerosol inhalation device 1 is a device for suctioning aerosol with flavor added without combustion, and has a rod shape extending along a predetermined direction (hereinafter, referred to as an X direction). As shown in FIGs. 1 and 2, the aerosol inhalation device 1 is provided with a power supply unit 10, a first cartridge 20, and a second cartridge 30 in this order along the X direction. The first cartridge 20 may be attachable to and detachable from the power supply unit 10, and the second cartridge 30 may be attachable to and detachable from the first cartridge 20. In other words, the first cartridge 20 and the second cartridge 30 are replaceable with respect to the power supply unit 10. The second cartridge 30 is replaceable with respect to the first cartridge 20. The first cartridge 20 may be fitted and fixed to the power supply unit 10 so that a user cannot easily attach and detach the first cartridge 20.

### (Power Supply Unit)

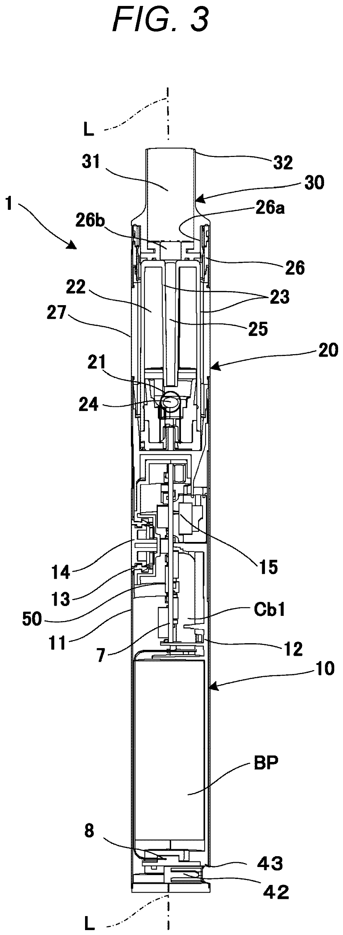

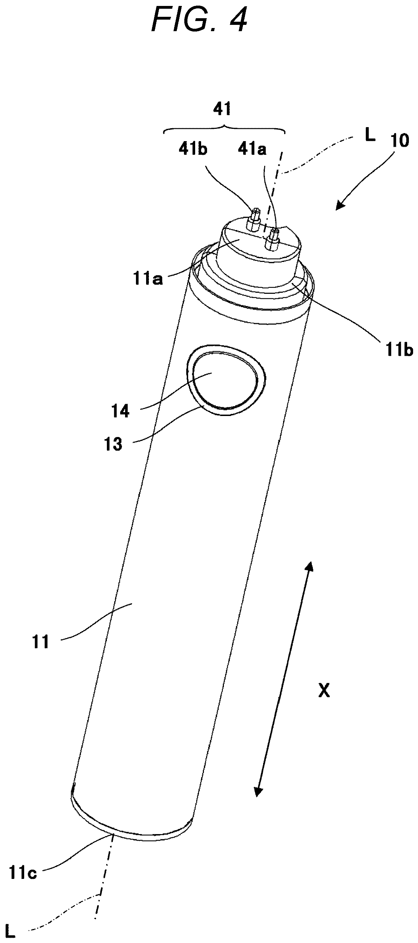

As shown in FIGs. 3 to 5 and 7, the power supply unit 10 according to the present embodiment accommodates a battery pack BP, a micro controller unit (MCU) 50, an MCU mounting substrate 7, a receptacle mounting substrate 8, and the like in a cylindrical case 11.

A power supply BAT accommodated in the battery pack BP is a rechargeable secondary battery, an electric double layer capacitor, and the like, and is preferably a lithium ion secondary battery. An electrolyte of the power supply BAT may include one or a combination of a gel electrolyte, an electrolyte solution, a solid electrolyte, and an ionic liquid.

A discharge terminal 41 is provided on a top portion 11a located on one end side (first cartridge 20 side) of the case 11 in the X direction. The discharge terminal 41 includes a positive electrode-side discharge terminal 41a and a negative electrode-side discharge terminal 41b. In the present specification, a "positive electrode side" means a higher potential side than a "negative electrode side". In other words, the "negative electrode side" means a lower potential side than the "positive electrode side". Therefore, in the following description, the term "positive electrode side" may be read as a "high potential side", and the term "negative electrode side" may be read as a "low potential side".

The positive electrode-side discharge terminal 41a and the negative electrode-side discharge terminal 41b protrude from the top portion 11a toward the first cartridge 20, and are electrically connectable to a heater 21 of the first cartridge 20. In addition, a low floor portion 11b having a height smaller than that of the top portion 11a is provided around the top portion 11a.

A charging opening 43 (see FIG. 2) for allowing access to a charging terminal 42 is provided in a peripheral wall portion on a bottom portion 11c side, a bottom portion 11c being located on the other end side of the case 11 (side opposite to the first cartridge 20) in the X direction. The charging terminal 42 is electrically connected to an external power supply such as an outlet or a mobile battery to receive electric power supply, is a universal serial bus (USB) Type-C receptacle in the present embodiment, but is not limited thereto. The charging opening 43 may be provided in a bottom surface on the bottom portion 11c side instead of the peripheral wall portion on the bottom portion 11c side.

The charging terminal 42 may include, for example, a power receiving coil, and may wirelessly receive the electric power transmitted from the external power supply. A wireless power transfer method in this case may be an electromagnetic induction type, a magnetic resonance type, or a combination of the electromagnetic induction type and the magnetic resonance type. In addition, as another example, the charging terminal 42 may be connected to various USB terminals or the like, and may include the power receiving coil. With such a configuration, the chances of charging the power supply BAT may be increased.

In the case 11, an operation unit 14 that is operable by the user is provided on the peripheral wall portion of the top portion 11a so as to face a side opposite to the charging opening 43. The operation unit 14 is implemented by a button-type switch, and is used, for example, to activate and deactivate the MCU 50 and various sensors in accordance with a use intention of the user. The operation unit 14 may be implemented by a touch panel or the like.

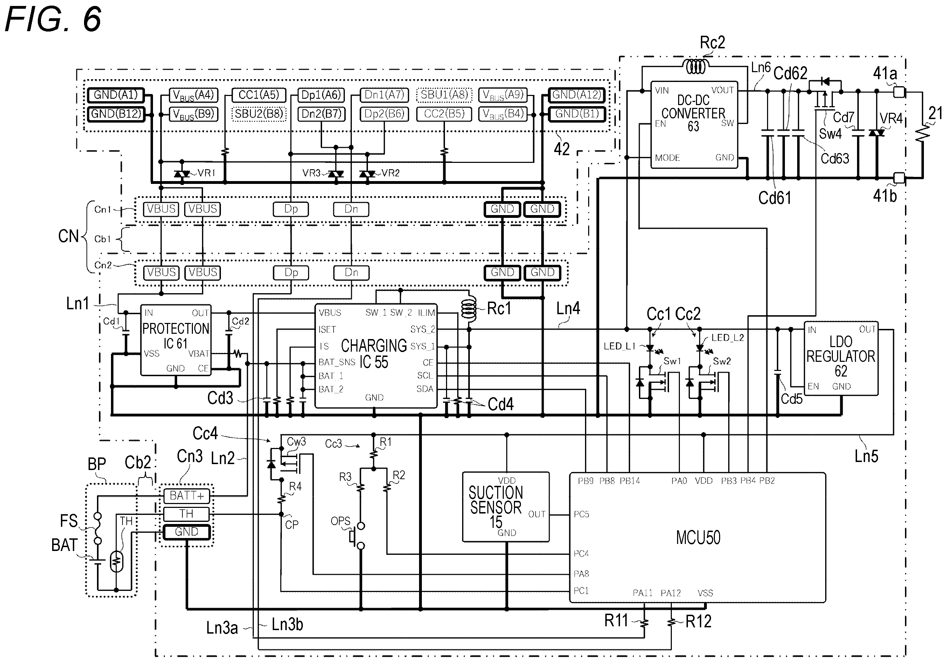

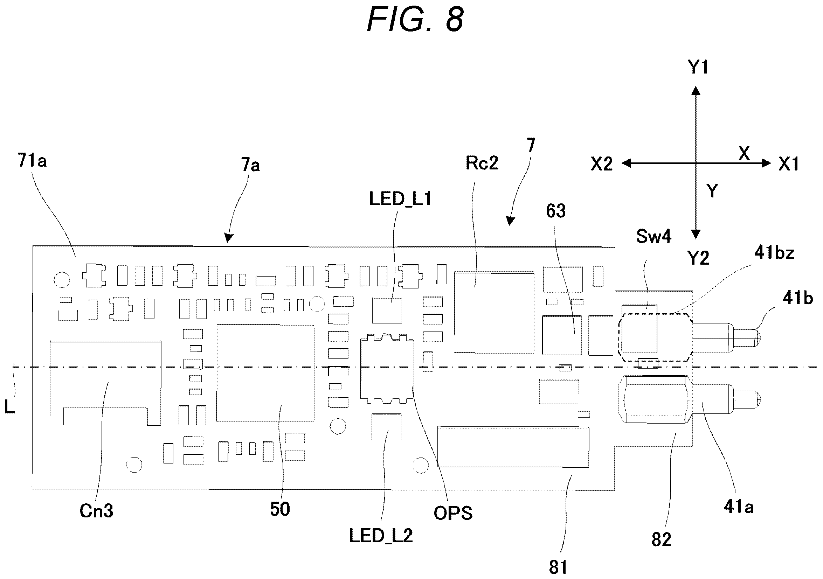

The aerosol inhalation device 1 is provided with a notification unit that notifies various types of information. The notification unit may be implemented by a light emitting element, a vibration element, or a sound output element. In addition, the notification unit may be a combination of two or more of the light emitting element, the vibration element, and the sound output element. The notification unit may be provided in any of the power supply unit 10, the first cartridge 20, and the second cartridge 30, and is preferably provided in the power supply unit 10 in order to shorten a conductive wire (that is, a wiring distance) from the power supply BAT. The notification unit according to the present embodiment includes an LED window 13 provided around the operation unit 14, and an LED L1 and an LED L2 (see FIGs. 6 and 8) to be described later. An internal configuration of the power supply unit 10 will be described later.

### (First Cartridge)

As shown in FIG. 3, the first cartridge 20 includes, in a cylindrical cartridge case 27, a reservoir 23 that stores an aerosol source 22, the heater 21 that atomizes and/or vaporizes (hereinafter, simply referred to as "atomizes") the aerosol source 22, a wick 24 that draws the aerosol source from the reservoir 23 to the heater 21, an aerosol flow path 25 through which aerosol generated by atomizing the aerosol source 22 flows toward the second cartridge 30, and an end cap 26 that accommodates a part of the second cartridge 30.

The reservoir 23 is partitioned to surround the aerosol flow path 25 and stores the aerosol source 22. The reservoir 23 may accommodate a porous body such as a resin web or cotton, and the aerosol source 22 may be impregnated in the porous body. The reservoir 23 may store only the aerosol source 22 without accommodating the porous body on the resin web or the cotton. The aerosol source 22 contains a liquid such as glycerin, propylene glycol, and water. An amount of the aerosol source 22 stored in the reservoir 23 may be visually confirmed through a remaining amount confirmation window 28 (see FIGs. 1 and 2) provided in the first cartridge 20. A gap (not shown), which is an air intake port is formed between the remaining amount confirmation window 28 and the cartridge case 27, and outside air is taken into the cartridge case 27 through the gap. The air intake port is not necessarily provided around the remaining amount confirmation window 28. For example, a gap may be formed between the operation unit 14 and the LED window 13 provided in the power supply unit, and outside air may be taken into the case 11 through the gap, or the charging opening 43 may be used. In addition, a communication hole may be provided in a wall surface of the cartridge case 27 or a wall surface of the case 11 to communicate the inside and the outside.

The wick 24 is a liquid holding member that draws the aerosol source 22 from the reservoir 23 to the heater 21 using capillary action, and is formed of, for example, glass fiber or porous ceramic.

The heater 21 atomizes the aerosol source 22 by electric power supplied from the power supply BAT via the discharge terminal 41 without combustion. The heater 21 is implemented by a heating wire (coil) wound at a predetermined pitch. The heater 21 is an example of a load capable of generating aerosol by atomizing the aerosol source 22, and the load is, for example, a heating element or an ultrasonic generator. Examples of the heating element include a heating resistor, a ceramic heater, and an induction heating heater.

The aerosol flow path 25 is provided downstream of the heater 21 and on a center line L of the power supply unit 10 (case 11). The center line L is a line continuously connecting center points of the power supply unit 10 (case 11) in the X direction when the power supply unit 10 (case 11) is cut along a plane orthogonal to the X direction.

The end cap 26 includes a cartridge accommodating portion 26a that accommodates a part of the second cartridge 30, and a communication passage 26b that communicates the aerosol flow path 25 with the cartridge accommodating portion 26a.

### (Second Cartridge)

The second cartridge 30 contains a flavor source 31. The second cartridge 30 is detachably accommodated in the cartridge accommodating portion 26a provided in the end cap 26 of the first cartridge 20. The second cartridge 30 has a suction port 32 for the user at an end portion on a side opposite to the first cartridge 20 side. The suction port 32 is not limited to being integrated with the second cartridge 30, and may be attachable to and detachable from the second cartridge 30. By providing the suction port 32 separately from the power supply unit 10 and the first cartridge 20 in this way, the suction port 32 may be kept hygienically.

The second cartridge 30 passes the aerosol generated by atomizing the aerosol source 22 with the heater 21 through the flavor source 31 to impart flavor to the aerosol. As a raw material piece constituting the flavor source 31, it is possible to use a molded product obtained by molding a shredded tobacco or a tobacco raw material into granules. The flavor source 31 may be formed of plants other than tobacco (for example, mint, Chinese medicine, and herb). The flavor source 31 may contain a fragrance such as menthol.

In the aerosol inhalation device 1 according to the present embodiment, the aerosol with added flavor may be generated by the aerosol source 22, the flavor source 31, and the heater 21. That is, the aerosol source 22 and the flavor source 31 may be referred to as aerosol generating sources that generate aerosol.

A configuration of the aerosol generating sources used in the aerosol inhalation device 1 may include a configuration in which the aerosol source 22 and the flavor source 31 are separately provided, a configuration in which the aerosol source 22 and the flavor source 31 are integrally provided, a configuration in which the flavor source 31 is omitted and a substance that may be contained in the flavor source 31 is added to the aerosol source 22, a configuration in which a drug or the like is added to the aerosol source 22 instead of the flavor source 31, and the like.

In the aerosol inhalation device 1 configured in this way, the heater 21 atomizes the aerosol source 22 drawn or moved from the reservoir 23 by the wick 24. The aerosol generated by the atomization flows through the aerosol flow path 25 together with air flowing in from the gap (not shown), which is the air intake port formed between the remaining amount confirmation window 28 and the cartridge case 27, and is supplied to the second cartridge 30 via the communication passage 26b. The aerosol supplied to the second cartridge 30 is flavored by passing through the flavor source 31, and is supplied to the suction port 32.

### (Circuit Configuration of Power Supply Unit 10)

Next, a circuit configuration of the power supply unit 10 will be described with reference to FIG. 6.

In FIG. 6, electronic components illustrated within a range surrounded by an one-dot chain line are electronic components mounted on the receptacle mounting substrate 8. That is, the receptacle mounting substrate 8 includes, as main electronic components, the charging terminal 42 which is the receptacle into which a USB Type-C plug (hereinafter, also simply referred to as a USB plug) may be inserted, and a receptacle mounting substrate-side connector Cn1 to which one end of a substrate connection cable Cb1 that connects the receptacle mounting substrate 8 and the MCU mounting substrate 7 is connected. In the present embodiment, the substrate connection cable Cb1 is a flexible printed circuit (FPC) cable having six printed wirings, but is not limited thereto.

In FIG. 6, electronic components illustrated within a range surrounded by a two-dot chain line are electronic components mounted on the MCU mounting substrate 7. That is, the MCU mounting substrate 7 includes, as main electronic components, an MCU mounting substrate-side connector Cn2 to which the other end of the substrate connection cable Cb1 is connected, the MCU 50 that performs overall control of the aerosol inhalation device 1 including the power supply unit 10, a charging integrated circuit (IC) 55 that performs charging of the power supply BAT or the like, a protection IC 61 that protects the charging IC 55, a low dropout (LDO) regulator 62 that supplies a predetermined voltage to the MCU 50 or the like, a suction sensor 15 that detects a puff (suction) operation of the user, the discharge terminal 41 (41a, 41b) to which the heater 21 is connected, a DC-DC converter 63 that may supply electric power to the discharge terminal 41, and a battery connector Cn3 to which a battery connection cable Cb2 that connects the battery pack BP including the power supply BAT, and the MCU mounting substrate 7 is connected.

The MCU 50, the charging IC 55, the protection IC 61, the LDO regulator 62, the suction sensor 15, and the DC-DC converter 63 are implemented by, for example, chipping a plurality of circuit elements, and are provided with pins as terminals for electrically connecting the inside and the outside of the chipped electronic components. The details of the pins provided in the chipped electronic components will be described later. It should be noted that in the present specification or the like, only main pins among the pins provided in the chipped electronic components are described.

The battery pack BP includes the power supply BAT, a fuse FS connected to a positive electrode terminal of the power supply BAT, and a thermistor TH connected to a negative electrode terminal of the power supply BAT and disposed close to the power supply BAT. The thermistor TH mainly includes an element having a negative temperature coefficient (NTC) characteristic or a positive temperature coefficient (PTC) characteristic, that is, an element having a correlation between an electric resistance value and a temperature. In addition, in the present embodiment, the battery connection cable Cb2 that connects the battery pack BP and the MCU mounting substrate 7 is an FPC cable having three printed patterns, but is not limited thereto. The battery connection cable Cb2 may be connected by three wires.

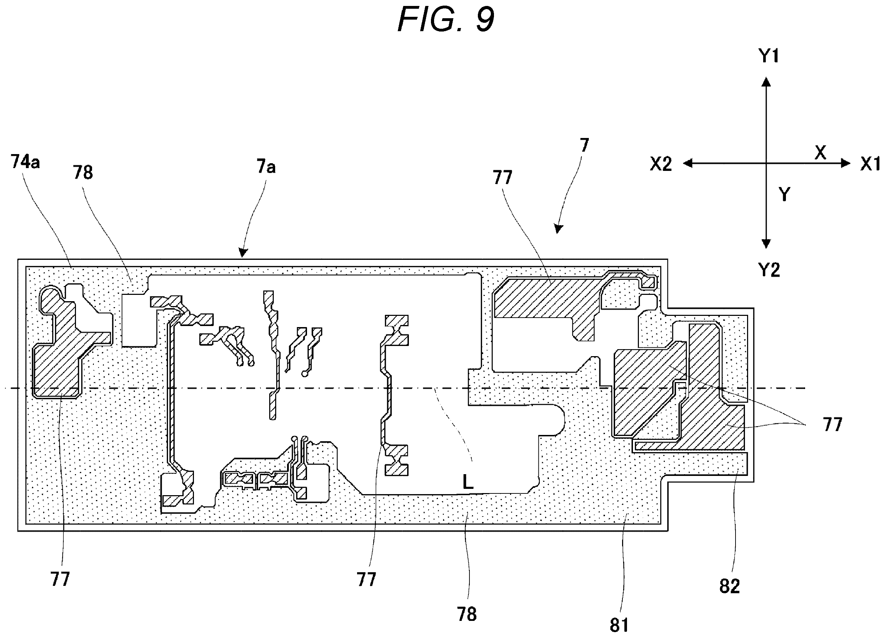

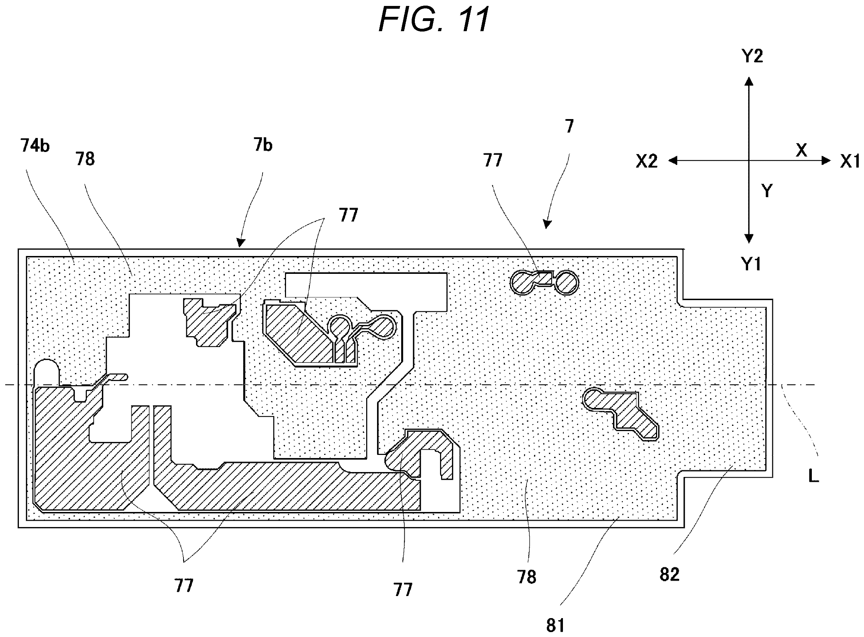

In FIG. 6, wiring indicated by a thick solid line is wiring connected to a ground provided in the power supply unit 10 (for example, wiring implemented by a ground pattern 78 or the like shown in FIGs. 9 and 11 to be described later). That is, the wiring has the same potential as a reference potential (ground potential) in the power supply unit 10, and is hereinafter also referred to as a ground line.

The power supply unit 10 is provided with a VBUS line Ln1, a VBAT line Ln2, a D+ line Ln3a, a D- line Ln3b, a power-path line Ln4, a VSYS line Ln5, and a VHEAT line Ln6 as main wiring other than the ground line. Each line (wiring) mainly includes a conductive pattern formed on the MCU mounting substrate 7. The electronic components connected to the lines will be described later.

Hereinafter, the substrate connection cable Cb1, the receptacle mounting substrate-side connector Cn1, and the MCU mounting substrate-side connector Cn2, which are electronic components connecting the receptacle mounting substrate 8 and the MCU mounting substrate 7, are collectively referred to as a substrate connection portion CN.

### (Charging Terminal and Protection IC)

The charging terminal 42 includes pins (terminals) connected to an A1 pin, anA4 pin, an A5 pin, anA6 pin, anA7 pin, an A8 pin, an A9 pin, an A12 pin, a B1 pin, a B4 pin, a B5 pin, a B6 pin, a B7 pin, a B8 pin, a B9 pin, and a B12 pin of the inserted USB plug. In the present specification or the like, the pins of the charging terminal 42 corresponding to the An pins (n = 1 to 12) of the USB plug are also referred to as the An pins of the charging terminal 42. Similarly, the pins of the charging terminal 42 corresponding to the Bn pins of the USB plug are also referred to as the Bn pins of the charging terminal 42.

The A1 pin, the A12 pin, the B1 pin, and the B12 pin of the charging terminal 42 corresponding to GND (ground) pins of the USB plug are connected to the ground line.

The A4 pin, the A9 pin, the B4 pin, and the B9 pin of the charging terminal 42 corresponding to VBUS pins of the USB plug are connected to a VBUS pin, which is a power supply terminal on a high potential side of the charging IC 55, via the substrate connection portion CN, the VBUS line Ln1, and the protection IC 61. Accordingly, electric power (for example, USB bus power) input from the external power supply to the power supply unit 10 via the pin A4, the pin A9, the pin B4, or the pin B9 of the charging terminal 42 may be supplied to the charging IC 55, and the electric power may be used to charge the power supply BAT or be supplied to the MCU 50 by the charging IC 55.

The protection IC 61 provided between the charging terminal 42 and the charging IC 55 will be described in detail. The protection IC 61 includes an IN pin which is a power supply terminal on a high potential side, a VSS pin which is a power supply terminal on a low potential side, a grounded GND pin, an OUT pin which is an output terminal to which a first system voltage Vs1 to be described later is output, a CE pin for turning on and off the protection IC 61 (hereinafter, also referred to as on and off), and a VBAT pin for detecting a connection state of the power supply BAT.

The A4 pin and the B9 pin, and the A9 pin and the B4 pin of the charging terminal 42 are connected in parallel to the IN pin of the protection IC 61 via the substrate connection portion CN and the VBUS line Ln1. In other words, the IN pin of the protection IC 61 is connected to the A4 pin and the B9 pin, and the A9 pin and the B4 pin of the charging terminal 42, respectively. The VSS pin, the GND pin, and the CE pin of the protection IC 61 are connected to the ground line. The OUT pin of the protection IC 61 is connected to the VBUS pin of the charging IC 55. The VBAT pin of the protection IC 61 is connected to the positive electrode terminal (that is, high potential side) of the power supply BAT via the VBAT line Ln2, the battery connector Cn3, the battery connection cable Cb2, and the fuse FS. The negative electrode terminal (that is, low potential side) of the power supply BAT is connected to the ground line via the battery connection cable Cb2 and the battery connector Cn3.

The protection IC 61 operates when a power supply voltage is supplied based on a difference between a potential of the IN pin and a potential of the VSS pin, and an input to the CE pin is a low level to output the predetermined first system voltage Vs1 from the OUT pin or detect whether the power supply BAT is connected based on a voltage input to the VBAT pin. The charging IC 55 in the present embodiment is enabled by inputting the low level to the CE pin, and thus operates in negative logic. Alternatively, the positive logic protection IC 61 that is enabled by inputting a high level to the CE pin may be used. In this case, it is preferable that the CE pin is to the IN pin so that the high level is input to the CE pin.

More specifically, when the USB plug is inserted into the charging terminal 42 and a USB cable including the USB plug is connected to the external power supply, a predetermined USB voltage (for example, 5 [V]) is supplied from the external power supply to the A4 pin, the A9 pin, the B4 pin, and the B9 pin of the charging terminal 42. Accordingly, the USB voltage is supplied to the protection IC 61 as the power supply voltage. In addition, the CE pin of the protection IC 61 is grounded, and thus a voltage input to the CE pin is normally the low level. Therefore, the protection IC 61 outputs the first system voltage Vs1 to the charging IC 55 in response to the supply of the USB voltage from the external power supply via the charging terminal 42.

The first system voltage Vs1 output by the protection IC 61 has a voltage value included in a range of a recommended input voltage of the charging IC 55 (for example, a range of 4.35 to 6.4 [V]).

For example, when the voltage input to the IN pin (in other words, the potential of the IN pin) is included in the range of the recommended input voltage of the charging IC 55, the protection IC 61 outputs the voltage input to the IN pin as it is as the first system voltage Vs1 from the OUT pin. On the other hand, when the voltage input to the IN pin exceeds a maximum value of the recommended input voltage of the charging IC 55, the protection IC 61 converts the voltage input to the IN pin into a predetermined voltage (for example, 5.5 ± 0.2 [V]) included in the range of the recommended input voltage of the charging IC 55, and outputs the converted voltage as the first system voltage Vs1 from the OUT pin. Accordingly, even when a high voltage exceeding the maximum value of the recommended input voltage of the charging IC 55 is input to the protection IC 61, it is possible to prevent the high voltage from being output from the protection IC 61 to the charging IC 55 and to protect the charging IC 55 from the high voltage.

When a high voltage exceeding the maximum value of the recommended input voltage of the charging IC 55 is input to the IN pin, the protection IC 61 may prevent the high voltage input to the IN pin from being output from the OUT pin by opening a circuit (not shown) in the protection IC 61 that connects the IN pin and the OUT pin.

As described above, the protection IC 61 may detect whether the power supply BAT is connected based on the voltage input to the VBAT pin. The protection IC 61 may use, in the protection IC 61, a detection result of whether the power supply BAT is connected, or may output the detection result to the outside of the protection IC 61 (for example, the MCU 50 or the charging IC 55). Further, the protection IC 61 may have various protection functions for protecting an electric circuit of the power supply unit 10, such as an overcurrent detection function and an overvoltage detection function, in addition to the above-described function for protecting the charging IC 55.

As shown in FIG. 6, a capacitor Cd1 for stabilizing (smoothing) the input to the IN pin of the protection IC 61 (also referred to as a smoothing capacitor or a bypass capacitor) is appropriately connected to the VBUS line Ln1 as necessary. Similarly, a capacitor Cd2 for stabilizing the input to the VBUS pin of the charging IC 55 (that is, the first system voltage Vs1 output from the protection IC 61) is appropriately connected between the OUT pin of the protection IC 61 and the VBUS pin of the charging IC 55 as necessary.

The A4 pin, the A9 pin, the B4 pin, and the B9 pin of the charging terminal 42 that are connected to the IN pin of the protection IC 61 are also connected to the ground line via a varistor (variable resistor: non-linear resistance element) VR1. In this way, by connecting the A4 pin, the A9 pin, the B4 pin, and the B9 pin of the charging terminal 42 to the ground line via the varistor VR1, even when static electricity is generated at the A4 pin, the A9 pin, the B4 pin, or the B9 pin of the charging terminal 42 due to rubbing or the like when the USB plug is inserted into the charging terminal 42, the static electricity may be released to the ground line via the varistor VR1. Therefore, the protection IC 61 may be protected from the static electricity generated at the A4 pin, the A9 pin, the B4 pin, or the B9 pin of the charging terminal 42.

The A6 pin and the B6 pin of the charging terminal 42 corresponding to a Dp (also referred to as D+) 1 pin or a Dp2 pin of the USB plug are connected to a PA 11 pin of the MCU 50 via the substrate connection portion CN and the D+ line Ln3a. The A7 pin and the B7 pin of the charging terminal 42 corresponding to a Dn (also referred to as D-) 1 pin or a Dp2 pin of the USB plug are connected to a PA12 pin of the MCU 50 via the substrate connection portion CN and the D- line Ln3b. Accordingly, it is possible to perform serial communication using, for example, two signal lines, i.e., the D+ line Ln3a and the D- line Ln3b between the MCU 50 and an external device (hereinafter, also simply referred to as an external device) to which the USB cable including the USB plug inserted into the charging terminal 42 is connected. A communication method other than serial communication may be adopted for communication between the external device and the MCU 50.

The A6 pin and the B6 pin of the charging terminal 42 connected to the PA 11 pin of the MCU 50 are also connected to the ground line via a varistor VR2. Accordingly, even when static electricity is generated at the A6 pin or the B6 pin of the charging terminal 42, the static electricity may be released to the ground line via the varistor VR2. Therefore, the MCU 50 may be protected from the static electricity generated at the A6 pin or the B6 pin of the charging terminal 42.

As shown in FIG. 6, when a resistor R11 is provided between the A6 pin and the B6 pin of the charging terminal 42, and the PA11 pin of the MCU 50, the resistor R11 may also prevent a large current from being input to the PA11 pin of the MCU 50. In the present specification or the like, the resistor is an element that is implemented by a resistance element, a transistor, or the like and has a predetermined electric resistance value.

The A7 pin and the B7 pin of the charging terminal 42 connected to the PA12 pin of the MCU 50 are also connected to the ground line via a varistor VR3. Accordingly, even when static electricity is generated at the A7 pin or the B7 pin of the charging terminal 42, the static electricity may be released to the ground line via the varistor VR3. Therefore, the MCU 50 may be protected from the static electricity generated at the A7 pin or the B7 pin of the charging terminal 42.

As shown in FIG. 6, when a resistor R12 is provided between the A7 pin and the B7 pin of the charging terminal 42, and the PA12 pin of the MCU 50, the resistor R12 may also prevent a large current from being input to the PA12 pin of the MCU 50.

In the power supply unit 10, there is no problem even if the MCU 50 does not recognize whether the USB plug is inserted into the charging terminal 42 in an upside-up direction or an upside-down direction. Therefore, the A5 pin and the B5 pin of the charging terminal 42 corresponding to a CC1 pin or a CC2 pin of the USB plug are connected to the ground line. Further, the A8 pin and the B8 pin of the charging terminal 42 corresponding to an SBU1 pin or an SBU2 pin of the USB plug are not connected to the electric circuit of the power supply unit 10. That is, the pins of the charging terminal 42 are not used in the power supply unit 10, and thus the pins may be omitted as appropriate. In this way, it is possible to prevent the circuit configuration of the power supply unit 10 from becoming complicated.

### (Charging IC)

The charging IC 55 includes the VBUS pin which is one of the power supply terminals on the high potential side, a GND pin which is a power supply terminal on a low potential side, a BAT_1 pin and a BAT_2 pin which are input and output terminals used for transmitting and receiving electric power between the charging IC 55 and the power supply BAT, a BAT SNS pin which is a detection terminal for detecting an input to the power supply BAT or an output from the power supply BAT, an SYS_1 pin, an SYS_2 pin, an SW_1 pin, and an SW_2 pin which are output terminals from which a second system voltage Vs2 to be described later is output, and a CE pin for turning on and off the charging IC 55. The pin BAT_1 and the pin BAT 2 may also function as power supply terminals on the high potential side of the charging IC 55.

As described above, the VBUS pin of the charging IC 55 is connected to the OUT pin of the protection IC 61. The BAT_1 pin, the BAT 2 pin, and the BAT SNS pin of the charging IC 55 are connected to the positive electrode terminal of the power supply BAT via the VBAT line Ln2, the battery connector Cn3, the battery connection cable Cb2, and the fuse FS. The SYS_1 pin, the SYS_2 pin, the SW_1 pin, and the SW_2 pin of the charging IC 55 are connected to an IN pin which is a power supply terminal on a high potential side of the LDO regulator 62 and a VIN pin which is a power supply terminal on a high potential side of the DC-DC converter 63 via the power-path line Ln4. The SW_1 pin and the SW_2 pin are connected to the power-path line Ln4 via a reactor Rc1. In addition, the CE pin of the charging IC 55 is connected to a PB14 pin of the MCU 50.

The charging IC 55 operates when a power supply voltage is supplied based on a difference between a potential of the VBUS pin, the BAT_1 pin, or the BAT_2 pin and a potential of the GND pin and an input to the CE pin is a high level, charges the power supply BAT or supplies the electric power discharged from the power supply BAT to the LDO regulator 62, the DC-DC converter 63, or the like. The charging IC 55 in the present embodiment is enabled by inputting the high level to the CE pin, and thus operates in positive logic. Alternatively, the negative logic charging IC 55 that is enabled by inputting a low level to the CE pin may be used.

More specifically, when the first system voltage Vs1 is input to the VBUS pin, the charging IC 55 outputs a voltage (for example, the first system voltage Vs1) for charging the power supply BAT to the power supply BAT from the BAT_1 pin and the BAT 2 pin. On the other hand, when the power supply BAT is discharged, an output voltage (terminal voltage) of the power supply BAT is input to the BAT _1 pin and the BAT 2 pin. In this case, the charging IC 55 outputs the second system voltage Vs2 corresponding to the voltage input to the BAT_1 pin and the BAT 2 pin to the LDO regulator 62, the DC-DC converter 63, or the like from the SYS_1 pin, the SYS_2 pin, the SW_1 pin, and the SW_2 pin. The second system voltage Vs2 is, for example, the output voltage of the power supply BAT, and specifically, may be a voltage of about 3 to 4 [V].

The charging IC 55 further includes an SCL pin connected to a PB8 pin of the MCU 50 and an SDA pin connected to a PB9 pin of the MCU 50. Accordingly, for example, inter-integrated circuit (I2C) communication may be performed between the charging IC 55 and the MCU 50. The charging IC 55 transmits, for example, battery information related to the power supply BAT to the MCU 50 using the communication. The battery information is, for example, information indicating a charging state (for example, charging or charging stopped) of the power supply BAT by the charging IC 55, a remaining amount (SOC: State of Charge) of the power supply BAT, or the like. A communication method other than the I2C communication may be adopted for communication between the charging IC 55 and the MCU 50.

As shown in FIG. 6, the charging IC 55 may further include an ISET pin, an ILIM pin, a TS pin, and the like. In a case where the charging IC 55 includes the ISET pin, a current value output from the charging IC 55 to the power supply BAT may be set based on an electric resistance value of a resistor connected between the ISET pin and the ground line. When the charging IC 55 includes the ILIM pin, an upper limit of a current value output from the charging IC 55 to the LDO regulator 62, the DC-DC converter 63, or the like may be set based on an electric resistance value of a resistor connected between the ILIM pin and the ground line. When the charging IC 55 includes the TS pin, the charging IC 55 may detect an electric resistance value or a temperature of a resistor connected to the TS pin based on a voltage input to the TS pin.

As shown in FIG. 6, a capacitor Cd3 for stabilizing the input to the BAT_SNS pin of the charging IC 55 or the like is appropriately connected to the VBAT line Ln2 as necessary. In addition, a capacitor Cd4 for stabilizing the second system voltage Vs2 output from the charging IC 55 and a capacitor Cd5 for stabilizing an input to the IN pin of the LDO regulator 62 are appropriately connected to the power-path line Ln4 as necessary.

### (LED Circuit)

A first LED circuit Cc1 for operating (for example, lighting) the LED L1 and a second LED circuit Cc2 for operating the LED L2 are further connected to the power-path line Ln4 to which the second system voltage Vs2 output from the charging IC 55 is supplied.

The first LED circuit Cc1 is implemented by connecting the LED L1 and a switch Sw1 that switches between conduction and interruption of the first LED circuit Cc1 in series. The first LED circuit Cc1 has one end connected to the power-path line Ln4, and the other end connected to the ground line. In addition, the switch Sw1 of the first LED circuit Cc1 is turned on in response to an ON command from the MCU 50, and is turned off in response to an OFF command from the MCU 50. When the switch Sw1 is turned on, the first LED circuit Cc1 becomes conductive, and the second system voltage Vs2 output from the charging IC 55 is supplied to the LED L1 to light the LED L1.

For example, a switch implemented by a MOSFET may be adopted as the switch Sw1. In the present embodiment, as an example, a gate terminal of the MOSFET constituting the switch Sw1 is connected to a PA0 pin of the MCU 50, and the MCU 50 controls an output from the PA0 pin to change a gate voltage applied to the gate terminal of the switch Sw1, thereby turning on or off the switch Sw1. The switch Sw1 is not limited to the MOSFET, and may be any switch that is turned on and off under the control of the MCU 50.

The second LED circuit Cc2 is implemented by connecting the LED L2 and a switch Sw2 that switches between conduction and interruption of the second LED circuit Cc2 in series. The second LED circuit Cc2 has one end connected to the power-path line Ln4, and the other end connected to the ground line. In addition, the switch Sw2 of the second LED circuit Cc2 is turned on in response to an ON command from the MCU 50, and is turned off in response to an OFF command from the MCU 50. When the switch Sw2 is turned on, the second LED circuit Cc2 becomes conductive, and the second system voltage Vs2 output from the charging IC 55 is supplied to the LED L2 to light the LED L2.

Similar to the switch Sw1, for example, a switch implemented by a MOSFET may be adopted as the switch Sw2. In the present embodiment, as an example, a gate terminal of the MOSFET constituting the switch Sw2 is connected to a PB3 pin of the MCU 50, and the MCU 50 controls an output from the PB3 pin to change a gate voltage applied to the gate terminal of the switch Sw2, thereby turning on or off the switch Sw2. The switch Sw2 is not limited to the MOSFET, and may be any switch that is turned on and off under the control of the MCU 50.

### (LDO Regulator)

The LDO regulator 62 includes the IN pin which is the power supply terminal on the high potential side, a GND pin which is a power supply terminal on a low potential side, an OUT pin which is an output terminal from which a third system voltage Vs3 to be described later is output, and an EN pin for turning on and off the LDO regulator 62.

As described above, the IN pin of the LDO regulator 62 is connected to the SYS_1 pin, the SYS_2 pin, and the like of the charging IC 55 via the power-path line Ln4. The GND pin of the LDO regulator 62 is connected to the ground line. The OUT pin of the LDO regulator 62 is connected to a VDD pin which is a power supply terminal on a high potential side of the MCU 50 and a VDD pin which is a power supply terminal on a high potential side of the suction sensor 15 via the VSYS line Ln5. The EN pin of the LDO regulator 62 is connected to the power-path line Ln4.

The LDO regulator 62 operates when a power supply voltage is supplied based on a difference between a potential of the IN pin and a potential of the GND pin and a voltage input to the EN pin is a high level, generates the predetermined third system voltage Vs3, and outputs the predetermined third system voltage Vs3 from the OUT pin. The LDO regulator 62 in the present embodiment is enabled by inputting the high level to the EN pin, and thus operates in positive logic. Alternatively, the positive logic LDO regulator 62 that is enabled by inputting a low level to the EN pin may be used. In this case, the EN pin is preferably connected to the ground line so that the low level is normally input to the EN pin.

More specifically, in response to the charging IC 55 outputting the second system voltage Vs2, the LDO regulator 62 is supplied with the second system voltage Vs2 as a power supply voltage. In addition, when the charging IC 55 outputs the second system voltage Vs2, the voltage input to the EN pin of the LDO regulator 62 becomes the second system voltage Vs2 (that is, high level). Therefore, when the charging IC 55 outputs the second system voltage Vs2, the LDO regulator 62 generates the third system voltage Vs3 and outputs the generated third system voltage Vs3 to the MCU 50, the suction sensor 15, or the like.

The third system voltage Vs3 output by the LDO regulator 62 has a voltage value suitable for operating the MCU 50, the suction sensor 15, or the like. Specifically, the third system voltage Vs3 is a voltage smaller than the second system voltage Vs2, and may be, for example, 2.5 [V].

### (Operation Switch Circuit)

An operation switch circuit Cc3 for detecting a user operation on an operation switch OPS and a power supply temperature detection circuit Cc4 for detecting a temperature of the power supply BAT are further connected to the VSYS line Ln5 to which the third system voltage Vs3 output from the LDO regulator 62 is supplied.

The operation switch circuit Cc3 includes a resistor R1, a resistor R2, a resistor R3, and the operation switch OPS. The resistor R1 has one end connected to the VSYS line Ln5 and the other end connected to one end of each of the resistors R2 and R3. In addition, the other end of the resistor R2 is connected to a PC4 pin of the MCU 50, and the other end of the resistor R3 is connected to one end of the operation switch OPS. The other end of the operation switch OPS is connected to the ground line.

When the operation switch OPS is not operated by the user, the PC4 pin of the MCU 50 receives a voltage obtained by stepping down the third system voltage Vs3 supplied to the VSYS line Ln5 by the resistors R1 and R2. On the other hand, when the operation switch OPS is operated by the user, the PC4 pin of the MCU 50 receives a voltage obtained by dividing the third system voltage Vs3 supplied to the VSYS line Ln5 by the resistors R1 and R3 and stepping down the same by the resistor R2. Therefore, the MCU 50 may detect the presence or absence of the user operation on the operation switch OPS based on the voltage input to pin PC4.

### (Power Supply Temperature Detection Circuit)

The power supply temperature detection circuit Cc4 is implemented by connecting the thermistor TH, a resistor R4, and a switch Sw3 that switches between conduction and interruption of the power supply temperature detection circuit Cc4 in series. One end of the power supply temperature detection circuit Cc4 on a switch Sw3 side is connected to the VSYS line Ln5, and the other end of the power supply temperature detection circuit Cc4 on a thermistor TH side is connected to the ground line. In addition, a PC1 pin of the MCU 50 is connected to a connection point CP between the resistor R4 and the thermistor TH in the power supply temperature detection circuit Cc4.

The switch Sw3 of the power supply temperature detection circuit Cc4 is turned on in response to an ON command from the MCU 50, and is turned off in response to an OFF command from the MCU 50. When the switch Sw3 is turned on, the power supply temperature detection circuit Cc4 becomes conductive, and a voltage obtained by dividing the third system voltage Vs3 supplied to the VSYS line Ln5 by an electric resistance value of the resistor R4 and an electric resistance value of the thermistor TH is input to the PC1 pin of the MCU 50. As described above, the thermistor TH has a correlation between the electric resistance value and a temperature, and thus a voltage input to the PC1 pin when the switch Sw3 is turned on changes depending on the temperature of the thermistor TH. Therefore, the MCU 50 may detect the temperature of the thermistor TH (that is, the temperature of the power supply BAT) based on the voltage input to the PC1 pin when the switch Sw3 is turned on.

Similar to the switch Sw1 or the like, for example, a switch implemented by a MOSFET may be adopted as the switch Sw3. In the present embodiment, as an example, a gate terminal of the MOSFET constituting the switch Sw3 is connected to a PA8 pin of the MCU 50, and the MCU 50 controls an output from the PA8 pin to change a gate voltage applied to the gate terminal of the switch Sw3, thereby turning on or off the switch Sw3. The switch Sw3 is not limited to the MOSFET, and may be any switch that is turned on and off under the control of the MCU 50.

### (DC-DC Converter)

The DC-DC converter 63 includes the VIN pin which is the power supply terminal on the high potential side, a GND pin which is a power supply terminal on a low potential side, a SW pin to which a voltage is input, a VOUT pin which is an output terminal from which a fourth system voltage Vs4 to be described later is output, an EN pin for turning on and off the DC-DC converter 63, and a MODE pin for setting an operation mode of the DC-DC converter 63.

As described above, the VIN pin of the DC-DC converter 63 is connected to the SYS_1 pin, the SYS_2 pin, and the like of the charging IC 55 via the power-path line Ln4. The GND pin of the DC-DC converter 63 is connected to the ground line. The SW pin of the DC-DC converter 63 is connected to the power-path line Ln4 via a reactor Rc2. The VOUT pin of the DC-DC converter 63 is connected to the positive electrode-side discharge terminal 41a which is a positive electrode terminal (that is, high potential side) of the discharge terminal 41 via the VHEAT line Ln6. The EN pin of the DC-DC converter 63 is connected to a PB2 pin of the MCU 50. The MODE pin of the DC-DC converter 63 is connected to the power-path line Ln4. In addition, the negative electrode-side discharge terminal 41b which is a negative electrode terminal (that is, low potential side) of the discharge terminal 41 is connected to the ground line.

The DC-DC converter 63 operates when a power supply voltage is supplied based on a difference between a potential of the VIN pin and a potential of the GND pin and a voltage input to the EN pin is a high level, boosts the input voltage, and outputs the boosted voltage from the VOUT pin. The DC-DC converter 63 in the present embodiment is enabled by inputting the high level to the EN pin, and thus operates in positive logic. Alternatively, the negative logic DC-DC converter 63 that is enabled by inputting a low level to the EN pin may be used.

More specifically, in response to the charging IC 55 outputting the second system voltage Vs2, the DC-DC converter 63 is supplied with the second system voltage Vs2 as a power supply voltage. In addition, the MCU 50 inputs a high-level voltage signal to the EN pin of the DC-DC converter 63 when determining to heat the heater 21 in response to an aerosol generation request or the like. Accordingly, the DC-DC converter 63 outputs the fourth system voltage Vs4 obtained by boosting the voltage input to the DC-DC converter 63 to the discharge terminal 41 (that is, the heater 21).

The fourth system voltage Vs4 output from the DC-DC converter 63 has a voltage value suitable for heating the heater 21. Specifically, the fourth system voltage Vs4 is a voltage larger than the third system voltage Vs3, and may be, for example, about 4.2 [V].

The DC-DC converter 63 is, for example, a switching regulator, and may operate in operation modes of a pulse width modulation mode (hereinafter, also referred to as a PWM mode) or a pulse frequency modulation mode (hereinafter, also referred to as a PFM mode). In the present embodiment, by connecting the MODE pin of the DC-DC converter 63 to the power-path line Ln4, the DC-DC converter 63 is operated in the PWM mode so that a voltage input to the MODE pin when the DC-DC converter 63 is operatable becomes a high level.

As shown in FIG. 6, the VHEAT line Ln6 is provided with a switch Sw4 that switches between conduction and interruption of the VHEAT line Ln6. The switch Sw4 is turned on in response to an ON command from the MCU 50, and is turned off in response to an OFF command from the MCU 50. When the switch Sw4 is turned on, the VHEAT line Ln6 becomes conductive, and the fourth system voltage Vs4 output from the DC-DC converter 63 is supplied to the discharge terminal 41 (specifically, the positive electrode-side discharge terminal 41a) to heat the heater 21. Accordingly, an aerosol source may be atomized or vaporized to generate aerosol.

For example, a switch implemented by a MOSFET may be adopted as the switch Sw4. More specifically, the switch Sw4 is preferably a power MOSFET whose switching speed is high. In the present embodiment, as an example, a gate terminal of the MOSFET constituting the switch Sw4 is connected to a PB4 pin of the MCU 50, and the MCU 50 controls an output from the PB4 pin to change a gate voltage applied to the gate terminal of the switch Sw4, thereby turning on or off the switch Sw4.

### (Another Electronic Component Connected to VHEAT Line Ln6)

When a voltage supplied to the discharge terminal 41 becomes unstable, an amount of aerosol generated by the heater 21 varies, which may lead to deterioration of a fragrance taste. Therefore, as shown in FIG. 6, capacitors for stabilizing the fourth system voltage Vs4 output from the DC-DC converter 63 are connected to the VHEAT line Ln6.

More specifically, in the power supply unit 10, three capacitors, i.e., a capacitor Cd61, a capacitor Cd62, and a capacitor Cd63 are provided in parallel as the capacitors for stabilizing the fourth system voltage Vs4 output from the DC-DC converter 63. In this way, by stabilizing (smoothing) the voltage with the plurality of capacitors, heat generated by the stabilization of the voltage may be dispersed to the plurality of capacitors. Therefore, it is possible to prevent deterioration or failure of the capacitors by avoiding the capacitors from reaching a high temperature, as compared with a case in which a voltage is stabilized by one capacitor.

In particular, from the viewpoint of ensuring the amount of aerosol generated by the heater 21, a high voltage value is required for the fourth system voltage Vs4. If such a high voltage is stabilized by one capacitor, it is assumed that the temperature of the capacitor becomes very high. As a result, not only the capacitor whose temperature has become high is significantly deteriorated, but also other electronic components disposed around the capacitor may be adversely affected. Therefore, as described above, the fourth system voltage Vs4 is preferably stabilized by the plurality of capacitors.

Among the capacitor Cd61, the capacitor Cd62, and the capacitor Cd63, the capacitor Cd61 has a small static capacitance and accordingly has a small physical size. On the other hand, each of the capacitor Cd62 and the capacitor Cd63 has a large static capacitance and accordingly has a large physical size. As a specific example, the static capacitance of the capacitor Cd61 may be 0.1 [µF], and the static capacitances of the capacitor Cd62 and the capacitor Cd63 may be 50 [µF]. In this way, even when the fourth system voltage Vs4 contains various pulsating components (ripples), these components may be removed by using the plurality of capacitors having different static capacitances.

As shown in FIG. 6, in the present embodiment, a varistor VR4 is provided between the discharge terminal 41 and the switch Sw4 in the VHEAT line Ln6. More specifically, the varistor VR4 has one end connected to the VHEAT line Ln6, and the other end connected to the ground line. By providing such a varistor VR4, for example, even when noise of static electricity is generated at the discharge terminal 41 due to attachment and detachment of the first cartridge 20, the noise may be released to the ground line via the varistor VR4. Therefore, a system of the power supply unit 10 of the switch Sw4, the DC-DC converter 63, or the like may be protected from noise of the static electricity or the like generated at the discharge terminal 41.

As shown in FIG. 6, in the VHEAT line Ln6, a capacitor Cd7 for stabilizing the voltage supplied to the discharge terminal 41 via the switch Sw4 is also connected between the discharge terminal 41 and the switch Sw4. The capacitor Cd7 may also function as a protection component for protecting the system of the power supply unit 10 of the switch Sw4, the DC-DC converter 63, or the like from the noise of the static electricity or the like generated at the discharge terminal 41. Therefore, the capacitor Cd7 may also protect the system of the power supply unit 10 of the switch Sw4, the DC-DC converter 63, or the like from the noise of the static electricity or the like generated at the discharge terminal 41. Not only when the first cartridge 20 is attached or detached but also when the user touches the discharge terminal 41 or when a stress is applied to the discharge terminal 41, noise of static electricity or the like may be generated at the discharge terminal 41.

### (Suction Sensor)

The suction sensor 15 includes the VDD pin which is the power supply terminal on the high potential side, a GND pin which is a power supply terminal on a low potential side, and an OUT pin which is an output terminal.

As described above, the VDD pin of the suction sensor 15 is connected to the OUT pin of the LDO regulator 62 via the VSYS line Ln5. The GND pin of the suction sensor 15 is connected to the ground line. The OUT pin of the suction sensor 15 is connected to a PC5 pin of the MCU 50.

The suction sensor 15 operates when a power supply voltage is supplied based on a difference between a potential of the VDD pin and a potential of the GND pin. Specifically, the suction sensor 15 operates when the third system voltage Vs3 output from the LDO regulator 62 is supplied as a power supply voltage, and functions as a sensor device that detects a puff operation of the user. For example, the suction sensor 15 mainly includes a capacitor microphone, a pressure sensor, or the like, and outputs a signal indicating a value of a change in pressure (internal pressure) in the power supply unit 10 caused by suction of the user as a detection result from the OUT pin to the MCU 50. A sensor device other than the capacitor microphone or the pressure sensor may be adopted as the suction sensor 15.

### (MCU)

The MCU 50 includes the VDD pin which is the power supply terminal on the high potential side, a VSS pin which is a power supply terminal on a low potential side, and the plurality of pins which function as input terminals or output terminals (hereinafter, also referred to as input and output pins). The MCU 50 operates when a power supply voltage is supplied based on a difference between a potential of the VDD pin and a potential of the VSS pin.

Since the MCU 50 includes the PA11 pin and the PA12 pin as the input and output pins, the MCU 50 is communicable with the external device using these pins, and may acquire, for example, update data of firmware from the external device. In addition, since the MCU 50 includes the PB8 pin and the PB9 pin as the input and output pins, the MCU 50 is communicable with the charging IC 55 using these pins, and may acquire the battery information or the like from the charging IC 55.

Since the MCU 50 includes the PB14 pin and the PB2 pin as the input and output pins, the MCU 50 may control ON and OFF of the charging IC 55 by an output from the PB14 pin, and ON and OFF of the DC-DC converter 63 by an output from the PB2 pin.

Since the MCU 50 includes the PA0 pin, the PB3 pin, the PA8 pin, and the PB4 pin as the input and output pins, the MCU 50 may turn on and off the switch Sw1 by the output from the PA0 pin, may turn on and off the switch Sw2 by the output from the PB3 pin, may turn on and off the switch Sw3 by the output from the PA8 pin, and may turn on and off the switch Sw4 by the output from the PB4 pin.

Since the MCU 50 includes the PC5 pin, the PC4 pin, and the PC1 pin as the input and output pins, the MCU 50 may detect the puff operation of the user based on an input to the PC5 pin, the user operation on the operation switch OPS based on the input to the PC4 pin, and the temperature of the thermistor TH (that is, the temperature of the power supply BAT) based on the input to the PC1 pin when the switch Sw3 is turned on.

### (Internal Configuration of Power Supply Unit)

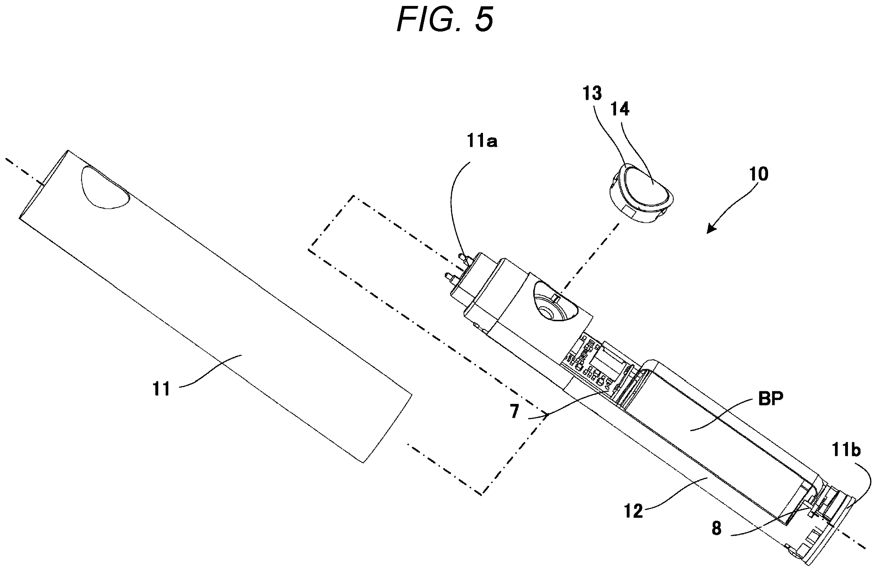

Next, the internal configuration of the power supply unit 10 will be described with reference to FIGs. 5 and 7 to 12.

An insulating chassis 12 is provided in an internal space of the case 11, and the charging terminal 42 (see FIG. 3), the receptacle mounting substrate 8, the battery pack BP including the power supply BAT, and the MCU mounting substrate 7 are held by the chassis 12 in this order from the bottom portion 11c toward the top portion 11a. The case 11 is provided with the charging opening 43 for allowing access to the charging terminal 42, an operation opening for exposing the operation unit 14 to the outside, and a pair of discharge openings for exposing the discharge terminal 41 to the outside from the top portion 11a.

### (MCU Mounting Substrate)

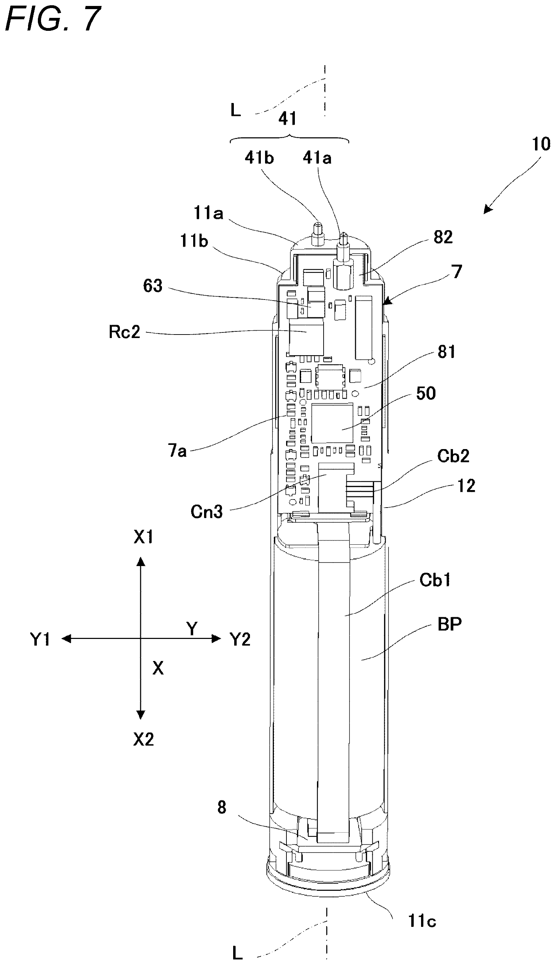

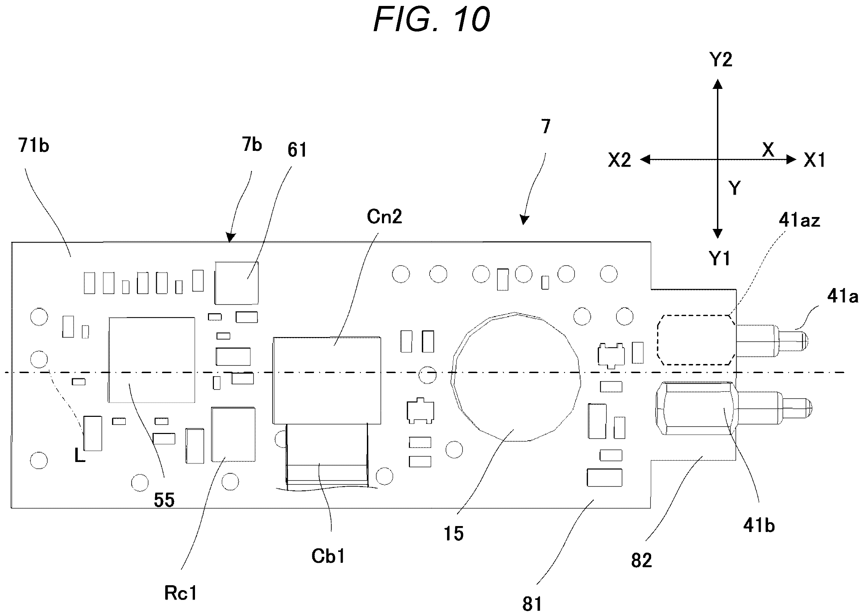

The plurality of electronic components described in the circuit configuration (see FIG. 6 or the like) of the power supply unit 10 are mounted on the MCU mounting substrate 7. The MCU mounting substrate 7 is a multilayer substrate formed by stacking a plurality of layers, and has a substantially rectangular shape. The MCU mounting substrate 7 is disposed such that a longitudinal direction thereof is along an extending direction (X direction) of the center line L of the case 11 and an element mounting surface on one side faces the operation unit 14. In the following description, the X direction may be referred to as the longitudinal direction, and in the X direction, a top portion 11a side is referred to as an X1 direction, and the bottom portion 11c side is referred to as an X2 direction. In addition, on the MCU mounting substrate 7, a direction orthogonal to the longitudinal direction X is referred to as a lateral direction Y In the lateral direction Y, one side (left side in FIG. 7, upper side in FIGs. 8 and 9, and lower side in FIGs. 10 and 11) is referred to as a Y1 direction, and the other side (right side in FIG. 7, lower side in FIGS. 8 and 9, and upper side in FIGs. 10 and 11) is referred to as a Y2 direction. A center line of the MCU mounting substrate 7 coincides with the center line L extending in the X direction of the power supply unit 10 (case 11). The center line of the MCU mounting substrate 7 is a line continuously connecting, in the longitudinal direction X, center points in a width direction (lateral direction) and a thickness direction of the MCU mounting substrate 7 when the MCU mounting substrate 7 is cut along a plane orthogonal to the longitudinal direction X.

As shown in FIG. 7, the MCU mounting substrate 7 includes a rectangular portion 81 occupying most of the MCU mounting substrate 7 and a protruding portion 82 protruding from the rectangular portion 81 in the X1 direction. Both end portions in the lateral direction Y of the protruding portion 82 are cut out, an end portion in the X1 direction of the protruding portion 82 faces the top portion 11a of the case 11, and an end portion in the X1 direction of the rectangular portion 81 in which the protruding portion 82 is not provided faces the low floor portion 11b of the case 11.

Assuming that a surface of the MCU mounting substrate 7 on an operation unit 14 side is referred to as a main surface 7a and a surface of the MCU mounting substrate 7 on a side opposite to the operation unit 14 side is referred to as a sub surface 7b, the MCU mounting substrate 7 is a double-sided mounting substrate on which electronic components are mounted on both the main surface 7a and the sub surface 7b.

As shown in FIG. 8, the battery connector Cn3, the MCU 50, the operation switch OPS, the LED L1, the LED L2, the DC-DC converter 63, the reactor Rc2 of the DC-DC converter 63, the switch Sw4, the positive electrode-side discharge terminal 41a, and the like are mounted on the main surface-side surface layer 71a of the main surface 7a (hereinafter, simply referred to as the main surface 7a).

More specifically, the button-type operation switch OPS is mounted substantially on a center of the main surface 7a so as to face the operation unit 14. Accordingly, the user may press down the operation switch OPS via the operation unit 14 of the case 11. In addition, a pair of the LED L1 and the LED L2 are mounted in the vicinity of the operation switch OPS so as to sandwich the operation switch OPS in the lateral direction Y Accordingly, the user may visually recognize light emitted from the LED L1 and the LED L2 through the LED window 13 provided around the operation unit 14.

On the main surface 7a, the battery connector Cn3 is mounted on an end portion in the X2 direction, and the positive electrode-side discharge terminal 41a is mounted on the protruding portion 82, which is an end portion in the X1 direction. The end portion in the X2 direction is located near the power supply BAT, and as shown in FIG. 7, the battery connection cable Cb2 extending from the power supply BAT is connected to the battery connector Cn3. The end portion in the X1 direction is located near the first cartridge 20, and the heater 21 is connected to the positive electrode-side discharge terminal 41a.

The positive electrode-side discharge terminal 41a is mounted on a Y2 direction side of the protruding portion 82 with the center line L interposed therebetween. The switch Sw4 is mounted on a Y1 direction side of the protruding portion 82 with the center line L interposed therebetween. In addition, the DC-DC converter 63 and the reactor Rc2 of the DC-DC converter 63 are mounted on the main surface 7a between the operation switch OPS and the switch Sw4 in the X direction.

As shown in FIG. 10, the charging IC 55, the reactor Rc1 of the charging IC 55, the protection IC 61, the MCU mounting substrate-side connector Cn2, the suction sensor 15, the negative electrode-side discharge terminal 41b, and the like are mounted on a sub surface-side surface layer 71b of the sub surface 7b (hereinafter, simply referred to as the sub surface 7b).

More specifically, the MCU mounting substrate-side connector Cn2 is mounted substantially on a center of the sub surface 7b, and the substrate connection cable Cb1 extending from the receptacle mounting substrate 8 on which the charging terminal 42 is mounted is connected to the MCU mounting substrate-side connector Cn2.

On the sub surface 7b, the charging IC 55 is mounted on an X2 direction side of the MCU mounting substrate-side connector Cn2, the reactor Rc1 of the charging IC 55 is mounted on a Y1 direction side in the Y direction between the charging IC 55 and the MCU mounting substrate-side connector Cn2 in the X direction, and the protection IC 61 is mounted on a Y2 direction side. Further, on the sub surface 7b, the suction sensor 15 is mounted on an X1 direction side of the MCU mounting substrate-side connector Cn2, and the negative electrode-side discharge terminal 41b is mounted on the protruding portion 82, which is the end portion in the X1 direction. As described above, the end portion in the X1 direction is located near the first cartridge 20, and the heater 21 is connected to the negative electrode-side discharge terminal 41b.

The negative electrode-side discharge terminal 41b is disposed on the Y1 direction side of the protruding portion 82 with the center line L interposed therebetween. As described above, the positive electrode-side discharge terminal 41a is mounted on the main surface 7a, and the negative electrode-side discharge terminal 41b is mounted on the sub surface 7b of the MCU mounting substrate 7. The arrangement of the positive electrode-side discharge terminal 41a and the negative electrode-side discharge terminal 41b will be described in detail later.

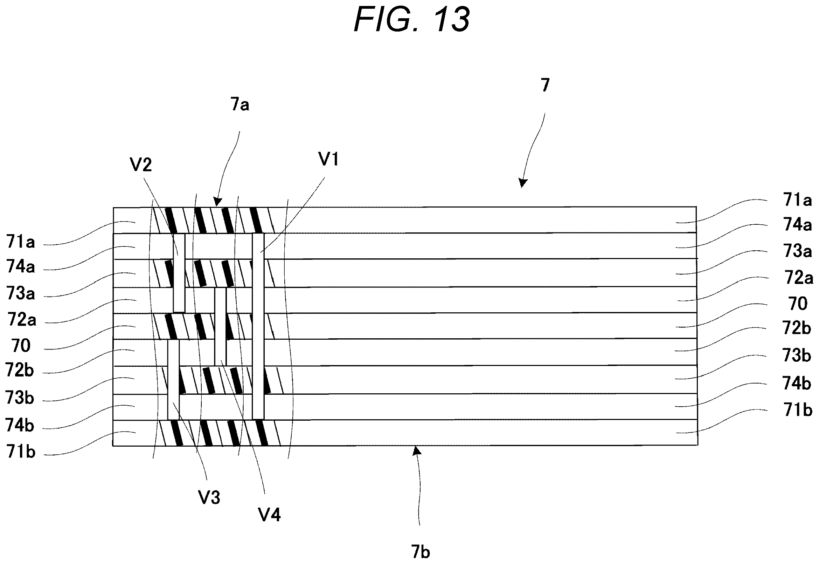

As shown in FIG. 13, the MCU mounting substrate 7 is provided with a first wiring layer 72a, a main surface-side insulating layer 73a, and a second wiring layer 74a in this order from a base layer 70 toward the main surface-side surface layer 71a, and is further provided with a third wiring layer 72b, a sub surface-side insulating layer 73b, and a fourth wiring layer 74b in this order from the base layer 70 toward the sub surface-side surface layer 71b. The MCU mounting substrate 7 is not limited thereto, and various configurations m bay be adopted. For example, the plurality of second wiring layers 74a and/or fourth wiring layers 74b may be provided, and only one of the first wiring layer 72a and the third wiring layer may be provided.

The second wiring layer 74a and the fourth wiring layer 74b are provided with conductive patterns formed of copper foil or the like. Assuming that a conductive pattern constituting a power supply line and a signal line is referred to as a wiring pattern 77 and a conductive pattern constituting a ground line is referred to as a ground pattern 78, the ground pattern 78 is provided to surround the wiring patterns 77 as shown in FIGs. 9 and 11. FIG. 9 is a diagram showing the second wiring layer 74a of the MCU mounting substrate 7, and FIG. 11 is a diagram showing the fourth wiring layer 74b of the MCU mounting substrate 7. In FIGs. 9 and 11, a portion indicated by diagonal hatching is the wiring pattern 77, and a portion indicated by dot hatching is the ground pattern 78. It should be noted that FIGs. 9 and 11 show only some of the plurality of wiring patterns.

As shown in FIG. 13, a via V1 is implemented by a conductor penetrating from the second wiring layer 74a to the fourth wiring layer 74b, and conductive patterns electrically connected to the via V1 among the conductive patterns formed in the first wiring layer 72a, the second wiring layer 74a, the third wiring layer 72b, and the fourth wiring layer 74b have the same potential. For example, the wiring pattern 77 of the second wiring layer 74a and the wiring pattern 77 of the fourth wiring layer 74b are electrically connected to each other through the via V1. A via V2 is implemented by a conductor penetrating from the second wiring layer 74a to the first wiring layer 72a, and conductive patterns electrically connected to the via V2 among the conductive patterns formed in the first wiring layer 72a and the second wiring layer 74a have the same potential. A via V3 is implemented by a conductor penetrating from the third wiring layer 72b to the fourth wiring layer 74b, and conductive patterns electrically connected to the via V3 among the conductive patterns formed in the third wiring layer 72b and the fourth wiring layer 74b have the same potential. For example, the ground pattern 78 of the second wiring layer 74a and a part of the conductive pattern of the first wiring layer 72a are electrically connected to each other through the via V2, and the ground pattern 78 of the fourth wiring layer 74b and a part of the conductive pattern of the third wiring layer 72b are electrically connected to each other through the via V3. A via V4 is implemented by a conductor penetrating from the first wiring layer 72a to the third wiring layer 72b, and wirings electrically connected to the via V4 among the conductive patterns formed in the first wiring layer 72a and the third wiring layer 72b have the same potential. For example, a part of the conductive pattern of the first wiring layer 72a and a part of the conductive pattern of the third wiring layer 72b are electrically connected to each other through the via V4. Accordingly, a part of the conductive pattern of the first wiring layer 72a and a part of the conductive pattern of the third wiring layer 72b, and the ground pattern 78 of the second wiring layer 74a and the ground pattern 78 of the fourth wiring layer 74b that are connected thereto may be ground lines each having a common reference potential.

The main surface-side surface layer 71a and the sub surface-side surface layer 71b are formed of a resist film, cover the second wiring layer 74a and the fourth wiring layer 74b, and protect the wiring patterns 77 from short-circuiting and the wiring pattern 77 and the ground pattern 78 from short-circuiting. The base layer 70, the main surface-side insulating layer 73a, and the sub surface-side insulating layer 73b are formed of, for example, an insulating material containing glass or epoxy resin, and are adhered to each other while preventing short-circuiting between upper and lower layers.

### (Positive Electrode-Side Discharge Terminal and Negative Electrode-Side Discharge Terminal)

As described above, the positive electrode-side discharge terminal 41a and the negative electrode-side discharge terminal 41b are directly mounted on the MCU mounting substrate 7. Therefore, it is not necessary to connect the positive electrode-side discharge terminal 41a and the negative electrode-side discharge terminal 41b to a heater connector formed on the MCU mounting substrate 7 by wiring as described above, and the power supply unit 10 may be downsized.

The positive electrode-side discharge terminal 41a is mounted on the main surface 7a of the MCU mounting substrate 7, and the negative electrode-side discharge terminal 41b is mounted on the sub surface 7b of the MCU mounting substrate 7, which is a surface opposite to the main surface 7a. Since the positive electrode-side discharge terminal 41a and the negative electrode-side discharge terminal 41b are separately mounted on the main surface 7a and the sub surface 7b, a sufficient space may be ensured on both surfaces of the MCU mounting substrate 7 as compared with a case in which the positive electrode-side discharge terminal 41a and the negative electrode-side discharge terminal 41b are mounted only on one surface of the MCU mounting substrate 7. That is, when both the positive electrode-side discharge terminal 41a and the negative electrode-side discharge terminal 41b are mounted on, for example, the main surface 7a of the MCU mounting substrate 7, a wide space may be ensured on the sub surface 7b, but a space on the main surface 7a is narrowed, and the electronic components cannot be disposed on both surfaces in a balanced manner. According to the present embodiment, many electronic components may be mounted on both surfaces of the MCU mounting substrate 7.

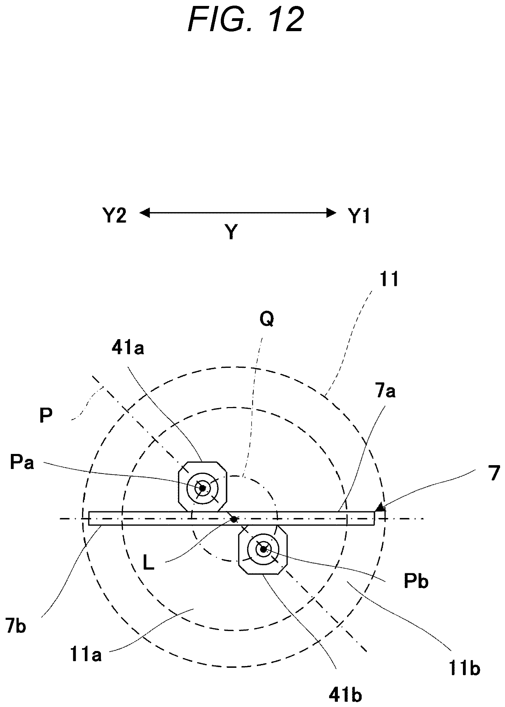

As shown in FIG. 7, the MCU mounting substrate 7 is accommodated in the case 11 such that the longitudinal direction thereof is along the extending direction of the center line L of the case 11, and thus a large area for the MCU mounting substrate 7 may be ensured. Further, as shown in FIG. 12, the MCU mounting substrate 7 passes through the center line L of the case 11 when viewed from the extending direction of the center line L, a wide space may surely be formed between the MCU mounting substrate 7 and the case 11 on both surfaces of the MCU mounting substrate 7.

In particular, when the case 11 has a cylindrical shape as in the present embodiment, the MCU mounting substrate 7 passes through the center line L of the case 11, and thus it is possible to ensure a large width (length in the Y direction) of the MCU mounting substrate 7. Further, there is a margin in a height direction on both surfaces of the MCU mounting substrate 7, and thus an electronic component having a height larger than that of the positive electrode-side discharge terminal 41a may be disposed on the main surface 7a, and an electronic component having a height larger than that of the negative electrode-side discharge terminal 41b may be disposed on the sub surface 7b. In the present embodiment, examples of the electronic components having a large height include the operation unit 14, the suction sensor 15, and the reactor Rc2 of the DC-DC converter 63. The operation unit 14 is used in combination with the operation switch OPS, and requires a space for moving between a proximity position at which the operation unit 14 comes into contact with the operation switch OPS and a separation position at which the operation unit 14 does not come into contact with the operation switch OPS. Since the suction sensor 15 has a diaphragm inside that vibrates due to the suction of the user, the suction sensor 15 is likely to be increased in size. The reactor Rc2 of the DC-DC converter 63 is likely to be increased in size so as to supply a boosted large current to the heater 21. In the present embodiment, as described above, the operation switch OPS is mounted on the main surface 7a. On the main surface 7a, the operation unit 14 is mounted so as to face the operation switch OPS, and the reactor Rc2 of the DC-DC converter 63 is mounted. On the other hand, the suction sensor 15 is mounted on the sub surface 7b.

As described above, the electronic components each having a large height may be mounted in the spaces secured on both surfaces of the MCU mounting substrate 7, and thus the power supply unit 10 may be made highly functional. In particular, each of the operation unit 14 and the suction sensor 15 has a large occupied area on the substrate, and thus by mounting the operation unit 14 and the suction sensor 15 on different surfaces, the power supply unit 10 may be made highly functional while preventing an increase in size or cost of the power supply unit 10. The reactor Rc2 of the DC-DC converter 63 is also mounted on a surface different from the surface on which the suction sensor 15 is mounted because the reactor Rc2 has a large height and a large occupied area on the substrate. The reactor Rc2 of the DC-DC converter 63 is preferably mounted on a surface different from the surface on which the operation unit 14 is mounted, but the reactor Rc2 needs to be mounted on the same surface as one of the surfaces on which the operation unit 14 and the suction sensor 15 are mounted, and thus the reactor Rc2 is mounted on the main surface 7a on which the switch Sw4 is mounted. Accordingly, the high-voltage wiring patterns 77 connected to the positive electrode-side discharge terminal 41a, the DC-DC converter 63, and the reactor Rc2 of the DC-DC converter 63 may be collectively mounted on the main surface 7a. Therefore, the wiring patterns 77 may be thickened without causing an increase in cost or size of the MCU mounting substrate 7, and thus heat or noise is less likely to be generated even when a large current is supplied to the positive electrode-side discharge terminal 41a.

Each of the positive electrode-side discharge terminal 41a and the negative electrode-side discharge terminal 41b has a thin needle-shaped probe at a tip portion exposed from the top portion 11a of the case 11. As shown in FIG. 12, when viewed from the extending direction (X direction) of the center line L of the case 11, a virtual line P connecting a center Pa of the probe of the positive electrode-side discharge terminal 41a and a center Pb of the probe of the negative electrode-side discharge terminal 41b is disposed so as to pass through the center line L. In other words, the positive electrode-side discharge terminal 41a and the negative electrode-side discharge terminal 41b are mounted such that the center Pa of the positive electrode-side discharge terminal 41a and Pb of the negative electrode-side discharge terminal 41b are located on a circle Q centered on the center line L. Accordingly, an appropriate gap may be provided between the positive electrode-side discharge terminal 41a and the negative electrode-side discharge terminal 41b, and thus unintended short-circuiting between the positive electrode-side discharge terminal 41a and the negative electrode-side discharge terminal 41b may be prevented without increasing the size of the power supply unit 10.

As shown in FIGs. 8 and 10, the positive electrode-side discharge terminal 41a mounted on the main surface 7a and the negative electrode-side discharge terminal 41b mounted on the sub surface 7b are disposed so as not to overlap each other when viewed from a direction orthogonal to the surfaces 7a and 7b of the MCU mounting substrate 7. When a region obtained by projecting the positive electrode-side discharge terminal 41a mounted on the main surface 7a onto the sub surface 7b is referred to as a positive electrode-side discharge terminal projection region 41az, and a region obtained by projecting the negative electrode-side discharge terminal 41b mounted on the sub surface 7b onto the main surface 7a is referred to as a negative electrode-side discharge terminal projection region 41bz, the positive electrode-side discharge terminal 41a and the negative electrode-side discharge terminal projection region 41bz do not overlap each other on the main surface 7a, and the negative electrode-side discharge terminal 41b and the positive electrode-side discharge terminal projection region 41az do not overlap each other on the sub surface 7b. Therefore, a more appropriate gap may be provided between the positive electrode-side discharge terminal 41a and the negative electrode-side discharge terminal 41b without increasing the size of the power supply unit 10, and thus the unintended short-circuiting between the positive electrode-side discharge terminal 41a and the negative electrode-side discharge terminal 41b may further be prevented.

On the other hand, as shown in FIG. 8, the switch Sw4 is mounted on the main surface 7a so as to overlap at least a part of the negative electrode-side discharge terminal projection region 41bz. An area of the MCU mounting substrate 7 may be more effectively utilized by mounting an electronic component such as the switch Sw4 on a region obtained by separately mounting the positive electrode-side discharge terminal 41a and the negative electrode-side discharge terminal 41b on both surfaces of the MCU mounting substrate 7. Accordingly, the size of the MCU mounting substrate 7 does not need to be increased, and the size or the cost of the power supply unit 10 may be reduced. An electronic component may also be disposed in the positive electrode-side discharge terminal projection region 41az of the sub surface 7b. The electronic component disposed in the negative electrode-side discharge terminal projection region 41bz or the positive electrode-side discharge terminal projection region 41az is not particularly limited, and two or more electronic components may be disposed instead of one.

As described above, the switch Sw4 is disposed on the VHEAT line Ln6 connecting the VOUT pin of the DC-DC converter 63 and the positive electrode-side discharge terminal 41a. A large current flows through the wiring pattern 77 connected to the positive electrode-side discharge terminal 41a. The wiring pattern 77 is preferably thick in order to reduce heat or noise generated in the wiring pattern 77 even when such a large current flows. However, in a case where the wiring pattern 77 extends over both surfaces of the MCU mounting substrate 7, it is necessary to use many vias for electrically connecting the surfaces, which may cause an increase in cost or size of the MCU mounting substrate 7. By disposing the switch Sw4 on the same main surface 7a as the positive electrode-side discharge terminal 41a, the wiring patterns 77 may be provided intensively on a main surface 7a side. Accordingly, heat or noise is less likely to be generated even when a large current is supplied to the positive electrode-side discharge terminal 41a without causing an increase in cost or size of the MCU mounting substrate 7.

The switch Sw4 may be disposed on the ground line connecting the ground and the negative electrode-side discharge terminal 41b, and may be mounted on the positive electrode-side discharge terminal projection region 41az of the sub surface 7b. In this case, the wiring patterns 77 connected to the positive electrode-side discharge terminal 41a may also be provided intensively on the main surface 7a side, and thus the same effect may be obtained.

Although various embodiments of the present invention have been described above with reference to the drawings, it is needless to say that the present invention is not limited to the above-described examples. It is apparent to those skilled in the art that various modifications or corrections may be conceived within the scope described in the claims, and it is understood that the modifications or corrections naturally fall within the technical scope of the present invention.

For example, in the embodiment, an example has been described in which the heater 21 is a heating unit that consumes electric power supplied from the power supply BAT to generate aerosol from an aerosol source, and electric power is supplied from the discharge terminal 41 of the power supply unit 10 to the heater 21, but the present invention is not limited thereto. For example, the heating unit that generates the aerosol may be constituted by a susceptor built in the first cartridge 20 or the like and an induction heating coil that transmits electric power to the susceptor by electromagnetic induction. When the heating unit includes the susceptor and the induction heating coil, the discharge terminal 41 of the power supply unit 10 is connected to the induction heating coil and supplies electric power to the induction heating coil.

In the present specification, at least the following matters are described. In parentheses, corresponding constituent components and the like in the above-mentioned embodiment are indicated, but the present invention is not limited thereto.
(1) 1. A power supply unit (power supply unit 10) of an aerosol generating device (aerosol inhalation device 1), including:
   a power supply (power supply BAT);
   a positive electrode-side discharge terminal (positive electrode-side discharge terminal 41a) and a negative electrode-side discharge terminal (negative electrode-side discharge terminal 41b) to which a load (heater 21) configured to generate aerosol from an aerosol source (aerosol source 22) by consuming electric power supplied from the power supply or a coil configured to transmit electric power to the load by electromagnetic induction is connected; and
   a circuit substrate (MCU mounting substrate 7) including a first surface (main surface 7a) on which the positive electrode-side discharge terminal is mounted and a second surface (sub surface 7b) which is a back surface of the first surface and on which the negative electrode-side discharge terminal is mounted.

According to (1), since the positive electrode-side discharge terminal and the negative electrode-side discharge terminal are mounted on the circuit substrate, the power supply unit of the aerosol generating device may be downsized in size as compared with a case in which the positive electrode-side discharge terminal and the negative electrode-side discharge terminal are not mounted on the circuit substrate. In addition, by separately mounting the positive electrode-side discharge terminal and the negative electrode-side discharge terminal on the first surface and the second surface of the circuit substrate, a sufficient space may be ensured on both surfaces of the circuit substrate as compared with a case in which the positive electrode-side discharge terminal and the negative electrode-side discharge terminal are mounted on one surface of the circuit substrate. Accordingly, many electronic components may be mounted on the circuit substrate.

(2) The power supply unit of the aerosol generating device according to (1), further including:
a cylindrical housing (case 11) configured to accommodate the power supply and the circuit substrate;
a first electronic component that is separate from the positive electrode-side discharge terminal and is mounted on the first surface; and
a second electronic component that is separate from the negative electrode-side discharge terminal and is mounted on the second surface, in which
the circuit substrate is disposed such that a longitudinal direction thereof is along an extending direction of a center line (center line L) of the housing, and
the circuit substrate is disposed inside the housing so as to pass through the center line when viewed from the extending direction.

According to (2), the longitudinal direction of the circuit substrate is along the extending direction of the center line of the housing, and thus a large area of the circuit substrate may be ensured. In addition, the circuit substrate passes through the center line of the housing when viewed from the extending direction, and thus a space formed between the circuit substrate and the housing may be widely ensured on both surfaces of the circuit substrate. Accordingly, more electronic components may be mounted on the circuit substrate.

(3) The power supply unit of the aerosol generating device according to (2), in which
a virtual line (virtual line P) connecting a center (center Pa) of the positive electrode-side discharge terminal and a center (center Pb) of the negative electrode-side discharge terminal passes through the center line.

According to (3), an appropriate gap may be provided between the positive electrode-side discharge terminal and the negative electrode-side discharge terminal, and thus unintended short-circuiting between the positive electrode-side discharge terminal and the negative electrode-side discharge terminal may be prevented without increasing a size of the power supply unit.

(4) The power supply unit of the aerosol generating device according to any one of (1) to (3), in which
the positive electrode-side discharge terminal and the negative electrode-side discharge terminal are disposed on the circuit substrate so as not to overlap each other when viewed from a direction orthogonal to the first surface.

According to (4), an appropriate gap may be provided between the positive electrode-side discharge terminal and the negative electrode-side discharge terminal without increasing the size of the power supply unit, and thus the unintended short-circuiting between the positive electrode-side discharge terminal and the negative electrode-side discharge terminal may further be prevented.

(5) The power supply unit of the aerosol generating device according to (4), further including:
an electronic component (switch Sw4) mounted on the circuit substrate, in which
the electronic component is mounted on a positive electrode-side discharge terminal projection region on the second surface onto which the positive electrode-side discharge terminal is projected or a negative electrode-side discharge terminal projection region on the first surface onto which the negative electrode-side discharge terminal is projected, when viewed from the direction orthogonal to the first surface, in the circuit substrate.

According to (5), an area of the circuit substrate may be more effectively utilized by mounting the electronic component in a region obtained by separately mounting the positive electrode-side discharge terminal and the negative electrode-side discharge terminal on the first surface and the second surface of the circuit substrate. Accordingly, a size of the circuit substrate does not need to be increased, and a size or a cost of the aerosol generating device may be reduced.

(6) The power supply unit of the aerosol generating device according to (5), in which
the electronic component is a switch disposed on an electric power transmission path between the power supply and the positive electrode-side discharge terminal, and is mounted on the negative electrode-side discharge terminal projection region on the first surface.

According to (6), the area of the circuit substrate may be more effectively utilized by mounting the switch on the negative electrode-side discharge terminal projection region on the first surface of the circuit substrate, which is obtained by separately mounting the positive electrode-side discharge terminal and the negative electrode-side discharge terminal on the first surface and the second surface of the circuit substrate. Accordingly, the size of the circuit substrate does not need to be increased, and the size or a cost of the power supply unit of the aerosol generating device may be reduced.

(7) The power supply unit of the aerosol generating device according to (6), further including:
a voltage converter including an input terminal connected to the power supply and an output terminal connected to the positive electrode-side discharge terminal, the voltage converter being mounted on the first surface, in which
the switch is disposed on an electric power transmission path between the output terminal of the voltage converter and the positive electrode-side discharge terminal.

A large current flows through a conductive pattern connected to the positive electrode-side discharge terminal. The conductive pattern is preferably thick in order to reduce heat or noise generated in the conductive pattern even when such a large current flows. However, when the conductive pattern extends over both surfaces of the circuit substrate, it is necessary to use many vias for electrically connecting the surfaces, which may cause an increase in cost or size of the circuit substrate. According to (7), the conductive pattern may be intensively provided on the first surface, the heat or the noise is less likely to be generated even when the large current is supplied to the positive electrode-side discharge terminal without causing an increase in cost or size of the circuit substrate.

(8) The power supply unit of the aerosol generating device according to (5), further including:
a ground, in which
the electronic component is a switch connected between the ground and the negative electrode-side discharge terminal, and is mounted on the positive electrode-side discharge terminal projection region on the second surface.

According to (8), the area of the circuit substrate may be more effectively utilized by mounting the switch on the positive electrode-side discharge terminal projection region on the second surface of the circuit substrate, which is obtained by separately mounting the positive electrode-side discharge terminal and the negative electrode-side discharge terminal on the first surface and the second surface of the circuit substrate. Accordingly, the size of the circuit substrate does not need to be increased, and the size or a cost of the power supply unit of the aerosol generating device may be reduced.

(9) The power supply unit of the aerosol generating device according to claim 1, further including:
a first electronic component (operation unit 14, suction sensor 15) having a height larger than that of the positive electrode-side discharge terminal and mounted on the first surface; and
a second electronic component (operation unit 14, suction sensor 15) having a height larger than that of the negative electrode-side discharge terminal and mounted on the second surface.

According to (9), the electronic components each having a large height may be mounted in the spaces secured on both surfaces of the circuit substrate, and thus the power supply unit of the aerosol generating device may be made highly functional.

(10) The power supply unit of the aerosol generating device according to (9), further including:
a suction sensor (suction sensor 15) configured to detect suction of a user; and
a button (operation unit 14) operable by the user, in which
the first electronic component is one of the suction sensor and the button, and
the second electronic component is the other of the suction sensor and the button.

According to (10), the suction sensor and the button each having a large height and a large occupied area on the substrate may be mounted on different surfaces of the circuit substrate in the spaces secured on both surfaces of the circuit substrate, and thus the power supply unit of the aerosol generating device may be made highly functional while preventing an increase in size or cost of the power supply unit of the aerosol generating device.

(11) The power supply unit of the aerosol generating device according to (9), further including:
a suction sensor (suction sensor 15) configured to detect suction of a user;
a voltage converter (DC-DC converter 63) including an input terminal (VIN pin) connected to the power supply and an output terminal (VOUT pin) connected to the positive electrode-side discharge terminal; and
a reactor (reactor Rc2) connected to the voltage converter, in which
the first electronic component is one of the suction sensor and the reactor, and
the second electronic component is the other of the suction sensor and the reactor.

According to (11), the suction sensor and the reactor each having a large height and a large occupied area on the substrate may be mounted on different surfaces of the circuit substrate in the spaces secured on both surfaces of the circuit substrate, and thus the power supply unit of the aerosol generating device may be made highly functional while preventing an increase in size or cost of the power supply unit of the aerosol generating device.

(12) The power supply unit of the aerosol generating device according to (11), in which
the voltage converter is mounted on the first surface,
the first electronic component is the reactor, and
the second electronic component is the suction sensor.

According to (12), the conductive pattern connected to the positive electrode-side discharge terminal, the voltage converter, and the reactor of the voltage converter may be collectively mounted on the first surface. Accordingly, the conductive pattern connected to the positive electrode-side discharge terminal may be thickened without causing an increase in cost or size of the circuit substrate, and thus the heat or noise is less likely to be generated even when the large current is supplied to the positive electrode-side discharge terminal.

### REFERENCE SIGNS LIST

1: aerosol inhalation device (aerosol generating device)
7: MCU mounting substrate (circuit substrate)
7a: main surface (first surface)
7b: sub surface (second surface)
10: power supply unit
11: case (housing)
14: operation unit (button of first electronic component and second electronic component)
15: suction sensor (first electronic component and second electronic component)
21: heater (load)
22: aerosol source
41a: positive electrode-side discharge terminal
41b: negative electrode-side discharge terminal
BAT: power supply
63: DC-DC converter (voltage converter)
P: virtual line
Pa: center (center of positive electrode-side discharge terminal)
Pb: center (center of negative electrode-side discharge terminal)
VIN pin: input terminal
VOUT pin: output terminal
Sw4: switch (electronic component)
L: center line

## Claims

1. A power supply unit of an aerosol generating device, comprising:
a power supply;
a positive electrode-side discharge terminal and a negative electrode-side discharge terminal to which a load configured to generate aerosol from an aerosol source by consuming electric power supplied from the power supply or a coil configured to transmit electric power to the load by electromagnetic induction is connected; and
a circuit substrate including a first surface on which the positive electrode-side discharge terminal is mounted and a second surface which is a back surface of the first surface and on which the negative electrode-side discharge terminal is mounted.

2. The power supply unit of the aerosol generating device according to claim 1, further comprising:
a cylindrical housing configured to accommodate the power supply and the circuit substrate;
a first electronic component that is separate from the positive electrode-side discharge terminal and is mounted on the first surface; and
a second electronic component that is separate from the negative electrode-side discharge terminal and is mounted on the second surface, wherein
the circuit substrate is disposed such that a longitudinal direction thereof is along an extending direction of a center line of the housing, and
the circuit substrate is disposed inside the housing so as to pass through the center line when viewed from the extending direction.

3. The power supply unit of the aerosol generating device according to claim 2, wherein
a virtual line connecting a center of the positive electrode-side discharge terminal and a center of the negative electrode-side discharge terminal passes through the center line.

4. The power supply unit of the aerosol generating device according to any one of claims 1 to 3, wherein
the positive electrode-side discharge terminal and the negative electrode-side discharge terminal are disposed on the circuit substrate so as not to overlap each other when viewed from a direction orthogonal to the first surface.

5. The power supply unit of the aerosol generating device according to claim 4, further comprising:
an electronic component mounted on the circuit substrate, wherein
the electronic component is mounted on a positive electrode-side discharge terminal projection region on the second surface onto which the positive electrode-side discharge terminal is projected or a negative electrode-side discharge terminal projection region on the first surface onto which the negative electrode-side discharge terminal is projected, when viewed from the direction orthogonal to the first surface, in the circuit substrate.

6. The power supply unit of the aerosol generating device according to claim 5, wherein
the electronic component is a switch disposed on an electric power transmission path between the power supply and the positive electrode-side discharge terminal, and is mounted on the negative electrode-side discharge terminal projection region on the first surface.

7. The power supply unit of the aerosol generating device according to claim 6, further comprising:
a voltage converter including an input terminal connected to the power supply and an output terminal connected to the positive electrode-side discharge terminal, the voltage converter being mounted on the first surface, wherein
the switch is disposed on an electric power transmission path between the output terminal of the voltage converter and the positive electrode-side discharge terminal.

8. The power supply unit of the aerosol generating device according to claim 5, further comprising:
a ground, wherein
the electronic component is a switch connected between the ground and the negative electrode-side discharge terminal, and is mounted on the positive electrode-side discharge terminal projection region on the second surface.

9. The power supply unit of the aerosol generating device according to claim 1, further comprising:
a first electronic component having a height larger than that of the positive electrode-side discharge terminal and mounted on the first surface; and
a second electronic component having a height larger than that of the negative electrode-side discharge terminal and mounted on the second surface.

10. The power supply unit of the aerosol generating device according to claim 9, further comprising:
a suction sensor configured to detect suction of a user; and
a button operable by the user, wherein
the first electronic component is one of the suction sensor and the button, and
the second electronic component is the other of the suction sensor and the button.

11. The power supply unit of the aerosol generating device according to claim 9, further comprising:
a suction sensor configured to detect suction of a user;
a voltage converter including an input terminal connected to the power supply and an output terminal connected to the positive electrode-side discharge terminal; and
a reactor connected to the voltage converter, wherein
the first electronic component is one of the suction sensor and the reactor, and
the second electronic component is the other of the suction sensor and the reactor.

12. The power supply unit of the aerosol generating device according to claim 11, wherein
the voltage converter is mounted on the first surface,
the first electronic component is the reactor, and
the second electronic component is the suction sensor.
